# EUROPEAN PATENT SPECIFICATION

(11) **EP 2 588 787 B1**
(45) Date of publication and mention of the grant of the patent: **11.09.2019**
(21) Application number: 11740967.2
(22) Date of filing: 30.06.2011
(51) Int. Cl.: E03F 3/04, F16L 9/12, F16L 1/10, F16L 1/038, F16L 1/036

(54) **DRAINAGE PIPES**
ABFLUSSROHRE
TUYAUX DE DRAINAGE

(30) Priority: 30.06.2010 GB 201011042
(43) Date of publication of application: 08.05.2013
(73) Proprietor: Polypipe Limited, Edlington Doncaster South Yorkshire DN12 1ES (GB)
(72) Inventor: RAMELLA, Stuart Edward Alan, Leicestershire LE11 1LE (GB); FAIRBROTHER, Michael, Leicestershire LE11 1LE (GB)
(74) Representative: Oxley, Robin John George
(86) International application number: PCT/GB2011/000978
(87) International publication number: WO 2012/001354

(56) References cited:
- WO-A1-2007/042283
- DE-A1- 3 937 645
- GB-A- 2 221 972
- US-A- 3 081 599
- US-A- 5 078 430

## Description

The present invention relates to drainage pipes, and in particular to modular drainage pipes made up of a plurality of sections, which are connected together to form the pipe.

Ground water pipes are known, in which a lower channel is formed with poured concrete and a clay channel. Such pipes are formed on-site as the pipe is laid. It is also known to form a separate plastics channel and mount this in a formed pipe, for example by welding a channel and shoulders into the pipe. The channel pipe guides water to flow along the channel, which is formed in the lower part of the pipe, during dry-weather conditions, while in stormwater conditions the water rises above the central lower channel and the full bore of the channel is used. Attention is drawn to DE 39 37 645 A1 and US 3 081 599 A.

WO2007042283A discloses a drainage pipe comprising an inner channel with fixed width.

The invention seeks to overcome or ameliorate at least one of the disadvantages of the prior art, or provide a useful alternative.

According to an aspect of the present invention, there is provided a pipe for drainage of fluid according to claim 1. According to another aspect of the present invention, there is provided a method of forming a pipe according to claim 11. According to one aspect of the invention, there is provided a pipe inside which a channel is provided between two side shoulders. The pipe may be an underground pipe. In embodiments, the channel is open on its radially inner side. In embodiments the channel and shoulders are formed on a lower portion of the pipe, and in embodiments the channel is arranged at the lowermost point of the pipe.

In embodiments, the pipe is formed from a number of sections, which may be rings or annular sections, and which may have the shoulder portions formed therein. The rings/annular sections may be open at their axial ends in order to adjoin and communicate with an adjacent section. In embodiments the pipe sections are prefabricated before they are brought to site for assembly. In embodiments, the length of each section is similar to, substantially the same as or less than a distance across an open end of the section. In an embodiment, the shoulder portions and/or the pipe are formed from plastics
material. The shoulders may be formed on the inner surface of the pipe; they may be coextruded with the pipe sections or may be joined, or sealed to the sections after manufacture. In an embodiment, the shoulder portions are preformed in the sections before the sections are joined together. In an embodiment the shoulders include male and/or female portions which engage with corresponding female/male portions on an adjacent shoulder portion to hold adjacent sections of pipe together. In embodiments, the shoulder portions extend (radially) inwardly from the inner surface of each pipe section.

Each shoulder may have a male end or female portion facing towards an open end of the pipe section (in embodiments in the axial direction of the section) and may have the same or opposite portion at the opposite end. The female portions may have a recess extending into the shoulder in the axial direction of the pipe section (i.e. towards an open end of the section) and the male portions may have a correspondingly sized and orientated (e.g. towards or extending from the open end of the pipe section) male portion to fit into the recess and positively locate the female and male portions together against relative rotation when the pipe sections are abutting before they are joined.

The sections may be sealed together. The sections may be sealed together by electrofusion.

In an embodiment of the invention, the shoulder portions extend axially throughout each section. In other embodiments, a gap is maintained axially in the shoulder portions, i.e. between the open ends of the pipe section, for example to allow sealing of the adjacent sections. A blank may be provided to close the gap after the sealing of the adjacent portions has occurred. The separation of the shoulders can be altered as required in order to achieve the desired width of channel. In embodiments, the male and/or female portions of the shoulder may be separate parts from a main body of the shoulder, and may be chemically or mechanically attached thereto, for example, by glue, welding, or by snap fixing or the like. Alternatively, the male/female portions may be integral with the main body and formed in one piece.

The pipe sections may also be supplied with one or more cars (or gliders), the width(s) of which are substantially the same as the distance between the upstanding sides of the shoulders. In embodiments, the car(s) can run along the channel along the inner surface of the pipe sections between the shoulders. In embodiments, the moving means comprises at least one wheel. In embodiments, wheels or casters are provided to allow the car(s) to run along the length of the channel. In embodiments, the width of the car(s) is (are) tapered towards its (their) ends in the running direction. In embodiments, the car(s) is (are) elongated in their running direction. The car(s) aid(s) the alignment of the pipe sections. The car(s) may function to extend across a gap between two pipe sections to be joined together and sit in the channel of each section. This ensures that the channels, and therefore the shoulders, are aligned. The distance between the two sections can then be reduced while guiding the shoulders and mating portions into alignment and ensuring that they engage. Once two sections have been brought together, the car can proceed along the channel to the unjoined end of the pipe section and the process can be repeated with a further section until the pipe is complete. More than one car may be provided so that the joining process of different sections can be completed in parallel if desired. Tapering of the cars can allow the alignment of the sections to be achieved as the sections are brought together by being guided by the car as they approach until the channels of the two sections, and therefore the mating portions of the shoulders, are aligned.

Embodiments of the invention will now be described purely by way of example, with reference to the accompanying drawings, in which:
Figure 1 shows pipe sections according to an embodiment of the invention;
Figures 2a and 2b show shoulders for the pipe section of figure 1;
Figures 3a, 3b and 3c show the arrangement of the shoulders including a gap between the ends to allow for welding of the pipe sections together;
Figure 4 shows a car for use with the pipe section of figure 1;
Figure 5 shows the joining of two pipe sections of figure 1 using the car of figure 4;
Figure 6 shows two pipe sections so joined; and
Figure 7 shows the sections joined and the blanks of Figure 3c in place.

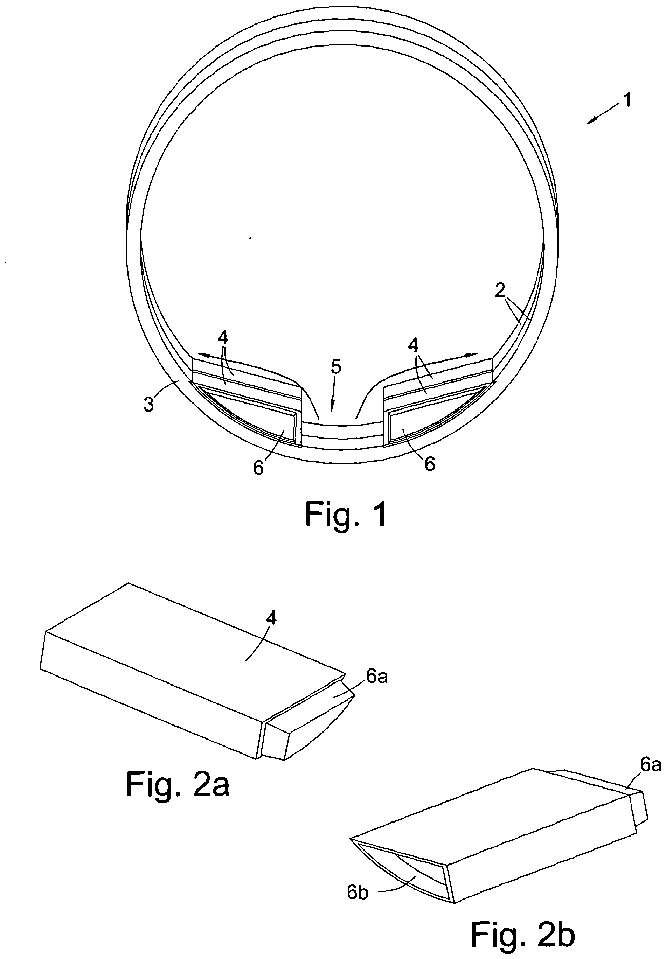

As shown generally in the drawings, and in particular figure 1, there is provided a pipe 1 for drainage of fluid, in particular water, the pipe 1 comprising a plurality of hollow and open ended pipe sections 2, each section including ends 3, for engagement with an end of another of the plurality of sections, a pair of shoulder portions 4 extending inward from the inner surface of each section, the shoulder portions being angularly separated around the pipe section and forming a channel 5 therebetween. Complimentary male and/or female mating portion(s) 6 are provided in the region of the ends of the section, for engagement with a complimentary mating portion on another of the plurality of pipe sections.

In the present embodiment, the pipe sections 2 are prefabricated, annular and are all of the same diameter. The annular pipe sections 2 define an axial direction, and are open at their axial ends to allow throughflow of water along the pipe when the sections 2 are assembled together. In the embodiment, the length of each section is less than a distance across an open end of the section. In alternative embodiments, the length of the channel may be substantially the same as or less than this distance. A continuous channel 5 is formed by the alignment of the shoulders 4 of each of the sections. The width of the channel 5 can be varied as required by the placement and angular separation (i.e. the separation around the inner surface of the pipe section) of the shoulders 4 on the inner surface of the pipe sections 2. The base of the channel 5 is defined by the inner surface of the pipe sections 2. In an alternative embodiment, not shown, the two shoulders may be formed in a single piece, which would be joined to form the channel, the base of the channel then being part of that single piece.

The channel 5 is open on its radially inner side to allow water to flow from it into the main bore of the pipe 1 and for water in the main bore of the pipe to fall into the channel 5. In an alternative embodiment, this inner side may be defined, for example, by a perforated cover or the like.

Figures 2a and 2b show a shoulder portion for use in the sections shown in figure 1. As shown, the shoulder is initially separate to the pipe section 2. However, in an alternative embodiment, the shoulder may be formed as part of the pipe section. In the present embodiment, the shoulder has an axially extending male end 6a and a complimentary female end 6b. The female end comprises a recess extending axially into the shoulder 4. When the shoulder is mounted in the pipe section 2, the recess is arranged generally along the axial direction of the pipe section 2. The male end 6a of the shoulder 4 is sized to fit inside the recess of the female end 6b of another shoulder 4 and engage with the other shoulder to prevent relative movement of the two. These may prevent relative separation in the axial direction once they are engaged, for example by way of a snap fit or the like, or may only engage in directions substantially perpendicular to the axis of the pipe 1, at least until the adjoining sections have been sealed together. The sealing may be with a rubber sealing joint or Band seals bridging around the outside of the joint and/or welding across two butted joints of the pipe sections.

In other embodiments, each shoulder may comprise a male portion at both ends, or a female portion at both ends. Further, a combination of male and female portions may be formed at one or both ends. The shoulder is generally triangular in cross section parallel to the mating ends, the hypotenuse being curved to match the inner surface of the pipe in which it is mounted, and the other two sides being substantially perpendicular, although this is not essential and the sides defining the channel could be angled to make the channel more or less open on its inner side in the pipe. In an alternative embodiment, the channels are formed only of the two inwardly extending sides, which are joined to the pipe.

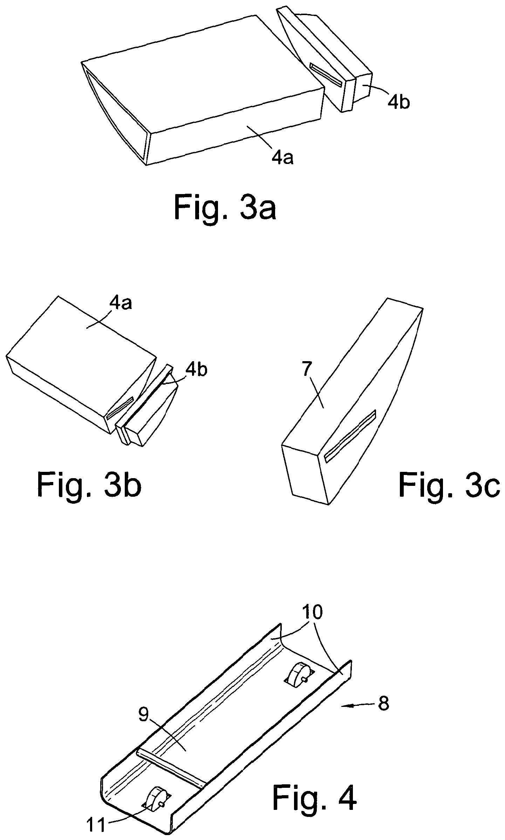

Figures 3a and 3b show a shoulder in an embodiment in which the shoulder does not run for the whole axial length of the pipe section, but is formed in two parts 4a, 4b for each pipe section. In this embodiment, a gap is left adjacent one end of the section so that a joining machine, for example an electrofusion ring can be used to seal two adjoining pipe sections. The electrofusion expansion ring pushes the male portion of the shoulder out to create a force against the coupler so that the weld faces are mating during the welding process. Once that joining process has been completed, a blank 7, as shown in figure 3c, can be inserted in the gap to create a shoulder that runs the length of the pipe unbroken. The blank 7 may for example have a resiliently extending snap fitting which engages with a corresponding recess with the adjacent shoulder parts 4a, 4b or vice versa, so that it is retained once inserted between them.

Figure 4 shows a car 8 for use with the pipe sections shown in figure 1. In particular the car 8 is used during the assembly of the pipe from the pipe sections. The car 8 has an elongate base 9 and two upstanding sides 10 extending away from the base, in the present embodiment substantially perpendicular thereto. Two wheels 11 are mounted to the base, to allow the car 8 to roll in the elongate direction, and to allow pipe sections in which the car is placed to move relative to the car in its elongate direction. The car 8 is sized so that the distance between the two upstanding sides 10 is the same, or slightly smaller than, the width of the channel shown in figure 1.

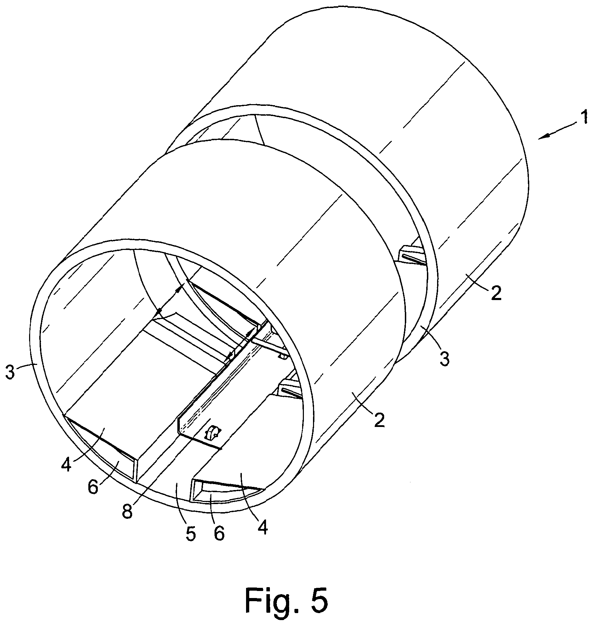

Figure 5 shows the assembly of the pipe 1 from two prefabricated pipe sections 2. As shown in Figures 5, 6 and 7, a method of forming a pipe 1 in situ is provided, the method comprising providing a first pipe section 2, the first pipe section 2 having a channel 5 defined between two shoulders 4, providing a car 8 in the channel 5 in the first pipe section 2 and placing the car 8 so that it extends from the end of the first pipe section 2, providing a second pipe section 2 next to the first pipe section 2, placing the car 8 and moving at least one of the pipe sections 2 so that the car 8 extends in the channel 5 of the second pipe section. The pipe sections 2 are then brought together so that their ends 3 abut, and complimentary mating portions on shoulder portions of the first and second pipe sections engage. Figure 5 shows the car 8 bridging the gap between the two sections 2, so that the channels of the two sections are aligned. Then, as the sections are brought into abutment, the mating portions of the shoulders engage to prevent relative movement mainly in the radial plane of the ends between the sections while the mating portions are engaged.

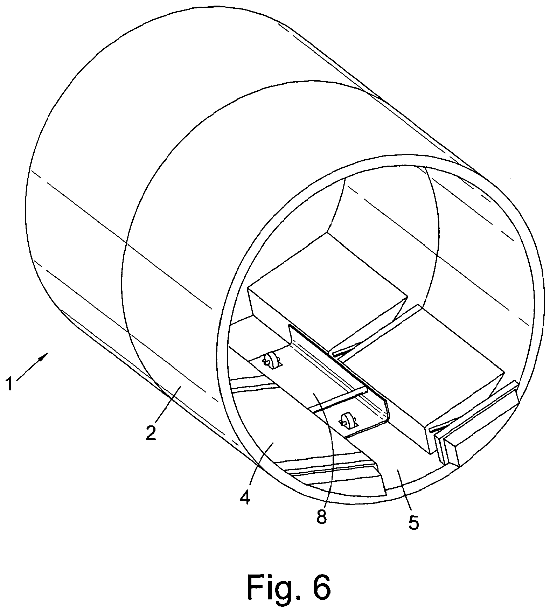

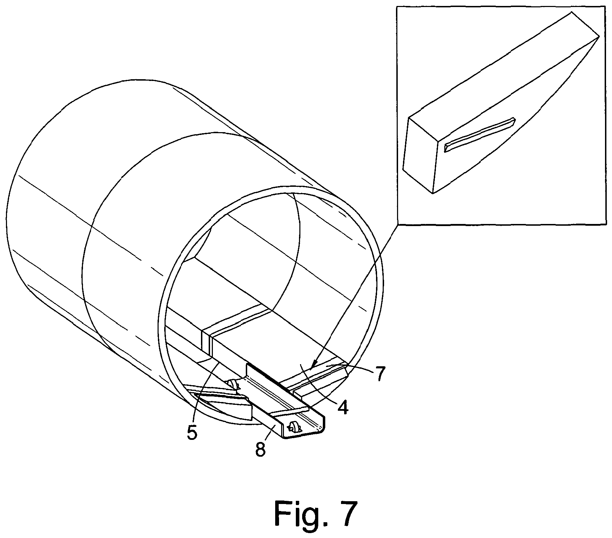

Figure 6 shows the two sections together with the car in the channel bridging them after it has guided them together. The gap in each shoulder is shown on one side of the channel, while the same gap, but filled with the blank, is shown on the other. As shown in figure 7, after the ends of the pipe sections are joined, the blanks 7 are inserted to provide an unbroken shoulder 4 along the pipe. Figure 7 also shows the car 8 having been moved along the channel 5 so that a further pipe section can be aligned and moved to abut the already assembled pipe sections. Thereafter, the process described above can be repeated until the pipe is formed.

Embodiments of the present invention allow the pipe sections to be completely prefabricated off-site; all the necessary components are fabricated before being sent to site for assembly. Installation thus simply involves aligning the pipe sections, joining them together, filling the gaps with the blanks (if provided and required) before moving on to the next joint. As no fabrication occurs on-site, the speed of installation is significantly increased, and reducing the possibility of injury, mistakes in production or the like on-site. Further, the amount of working required underground or in the confined space of an assembly location can be minimised, so protecting a work force.

Once formed from the pipe sections 2, during storm water flow, the water in the pipe 1 rises above the channel 5 created by the shoulders 4 and the full bore of the pipe is utilised. However, as the flow slows to dry-weather conditions, in which there is minimal flow, the remaining storm water is directed into the channel 5 created by the shoulders 4, so that flow is maintained in the lower cross section of the channel and waste matter is carried through the pipe 1. The faces of the shoulders 4 that extend away from the channel 5 are sloped *in situ* so that solids and particulates fall into the channel 5 as the water level falls.

The present invention has been described purely by way of example and various modifications will be apparent to the person skilled in the art, those modifications, and omissions and additions falling within the scope and spirit of the invention.

In the application, unless the context clearly requires otherwise, the terms "comprise", "comprises", "comprising" and the like are intended to be in the inclusive, rather than exhaustive sense, i.e. "including, but not limited to".

## Claims

1. A pipe (1) for drainage of fluid, in particular water, the pipe (1) comprising a plurality of hollow and open ended pipe sections (2), each section comprising:
opposing open ends (3), each for engagement with an end (3) of another of the plurality of sections; and
a pair of shoulder portions (4), the shoulder portions (4) being angularly separated around the pipe section, and forming a channel (5) therebetween, **characterised in that** a width of the channel (5) is adjustable by altering the angular separation of the shoulder portions (4).

2. A pipe (1) according to claim 1, wherein each pipe section (2) further comprises at least one male and/or female mating portion (6) in the region of the ends (3) on at least one of the shoulder portions (4), for engagement with a complimentary mating portion (6) on another of the plurality of pipe sections (2), and wherein the mating portion(s) (6) extend(s) substantially in the axial direction of the pipe sections (2).

3. A pipe (1) according to claim 1, wherein the channel (5) is open on its radially inner side.

4. A pipe (1) according to any preceding claim, wherein the channel (5) is substantially axial along the pipe sections (2).

5. A pipe (1) according to any preceding claim, wherein the channel base is formed of the inner surface of the pipe section (2), the shoulder portions (4) extend radially inwardly from the inner surface of each pipe section (2), and are formed on an inner surface of each pipe section (2).

6. A pipe (1) according to any preceding claim, wherein the shoulder portions (4) extend from one end (3) of each pipe section (2) to the other.

7. A pipe (1) according to any preceding claim, wherein the shoulder portions (4) are formed at each axial end (3) of the pipe sections (2) and a gap is formed axially therebetween.

8. A pipe (1) according to claim 7, further comprising a blank (7) configured to fit axially between the ends of the shoulder portions (4) to form a continuous shoulder from one axial end (3) of the pipe section (2) to the other.

9. A pipe (1) according to any preceding claim, further comprising guiding means, the width of which corresponding to the width of the channel (5) and moveable along the channel (5), the guiding means for guiding adjacent pipe sections (2) into engagement during assembly of the pipe.

10. A pipe (1) according to claim 9, wherein the guiding means comprises a car (8), with an elongate base (9), and means for allowing the car (8) to move along in its elongate direction.

11. A method of forming a pipe (1) in situ, comprising:
providing a first pipe section (2), the first pipe section (2) having a channel (5) defined between two shoulders (4) angularly separated around the first pipe section (2), wherein a width of the channel (5) is adjustable by altering the angular separation of the shoulders (4);
providing a car (8) in the channel (5) in the first pipe section (2) and placing the car (8) so that it extends from the end (3) of the first pipe section (2);
providing a second pipe section (2) next to the first pipe section (2);
placing the car (8) and moving at least one of the pipe sections (2) the so that the car (8) extends in the channel (5) of the second pipe section (2);
bringing the pipe sections (2) together so that they abut.

12. A method according to claim 11, wherein the pipe sections (2) are brought together so that complimentary mating portions (6) on shoulder portions (4) of the first and second pipe sections (2) engage.

13. A method according to claim 11 or 12, further comprising placing the first pipe section (2) with the channel (5) at the bottom of the pipe section (2).

14. A method according to any of claims 11 to 13, wherein the sections are prefabricated offsite before forming the pipe (1) *in situ.*

15. A method according to any of claims 11 to 14, further comprising covering the pipe (1) after assembly to form an underground pipe.

## Patentansprüche

1. Rohr (1) zum Abfluss von Fluid, insbesondere Wasser, wobei das Rohr (1) eine Vielzahl von hohlen und offenendigen Rohrabschnitten (2) beinhaltet, wobei jeder Rohrabschnitt Folgendes beinhaltet:
einander abgewandte offene Enden (3), jeweils zum Eingriff mit einem Ende (3) eines anderen der Vielzahl von Abschnitten; und
ein Paar Schulterabschnitte (4), wobei die Schulterabschnitte (4) winklig rund um den Rohrabschnitt getrennt sind und einen Kanal (5) dazwischen bilden, **dadurch gekennzeichnet, dass** eine Breite des Kanals (5) durch Verändern der winkligen Trennung der Schulterabschnitte (4) verstellbar ist.

2. Rohr (1) nach Anspruch 1, bei welchem jeder Rohrabschnitt (2) zudem mindestens einen männlichen und/oder weiblichen Passabschnitt (6) im Bereich der Enden (3) an mindestens einem der Schulterabschnitte (4), zum Eingriff mit einem komplementären Passabschnitt (6) an einem anderen der Vielzahl von Rohrabschnitten (2), beinhaltet, und wobei der oder die Passabschnitt(e) (6) sich im Wesentlichen in die axiale Richtung der Rohrabschnitte (2) erstreckt/erstrecken.

3. Rohr (1) nach Anspruch 1, bei welchem der Kanal (5) an seiner radial inneren Seite geöffnet ist.

4. Rohr (1) nach einem der vorhergehenden Ansprüche, bei welchem der Kanal (5) im Wesentlichen axial entlang der Rohrabschnitte (2) verläuft.

5. Rohr (1) nach einem der vorhergehenden Ansprüche, bei welchem die Kanalbasis aus der inneren Fläche des Rohrabschnittes (2) gebildet ist, die Schulterabschnitte (4) sich radial einwärts von der inneren Fläche eines jeden Rohrabschnittes (2) erstrecken und an einer inneren Fläche eines jeden Rohrabschnittes (2) gebildet sind.

6. Rohr (1) nach einem der vorhergehenden Ansprüche, bei welchem die Schulterabschnitte (4) sich von einem Ende (3) eines jeden Rohrabschnittes (2) zum anderen erstrecken.

7. Rohr (1) nach einem der vorhergehenden Ansprüche, bei welchem die Schulterabschnitte (4) an jedem axialen Ende (3) der Rohrabschnitte (2) gebildet sind und ein Spalt axial dazwischen gebildet ist.

8. Rohr (1) nach Anspruch 7, zu dem beinhaltend eine Rohling (7), welche konfiguriert ist, axial zwischen die Enden der Schulterabschnitte (4) zum Bilden einer kontinuierlichen Schulter von einem axialen Ende (3) des Rohrabschnittes (2) zum anderen zu passen.

9. Rohr (1) nach einem der vorhergehenden Ansprüche, zudem beinhaltend Führungsmittel, deren Breite der Breite des Kanals (5) entspricht, und welche entlang des Kanals (5) beweglich sind, wobei die Führungsmittel zum Führen aneinandergrenzender Rohrabschnitte (2) in Eingriff im Zuge des Zusammenbaus des Rohrs dienen.

10. Rohr (1) nach Anspruch 9, bei welchem das Führungsmittel einen Wagen (8) mit einer verlängerten Basis (9) beinhaltet, und Mittel, welche den Wagen (8) in die Lage versetzen, sich entlang seiner verlängerten Richtung zu bewegen.

11. Verfahren zum *in situ*-Bilden eines Rohrs (1), Folgendes beinhaltend:
Bereitstellen eines ersten Rohrabschnittes (2), wobei der erste Rohrabschnitt (2) einen Kanal (5) besitzt, welcher zwischen zwei Schultern (4) definiert ist, welche winklig rund um den ersten Rohrabschnitt (2) getrennt sind, wobei eine Breite des Kanals (5) durch Verändern der winkligen Trennung der Schulterabschnitte (4) verstellbar ist.
Bereitstellen eines Wagens (8) in dem Kanal (5) im ersten Rohrabschnitt (2) und das Platzieren des Wagens (8), so dass er sich von dem Ende (3) des ersten Rohrabschnittes (2) weg erstreckt;
Bereitstellen eines zweiten Rohrabschnittes (2) neben dem ersten Rohrabschnitt (2);
Platzieren des Wagens (8) und Bewegen mindestens eines der Rohrabschnitte (2) in einer Weise, dass der Wagen (8) sich in den Kanal (5) des zweiten Rohrabschnittes (2) erstreckt;
Zusammenbringen der Rohrabschnitte (2), so dass sie aneinander stoßen.

12. Verfahren nach Anspruch 11, bei welchem die Rohrabschnitte (2) so zusammengebracht werden, dass komplementäre Passabschnitte (6) an Schulterabschnitten (4) des ersten und des zweiten Rohrabschnittes (2) in Eingriff gehen.

13. Verfahren nach Anspruch 11 oder 12, zudem beinhaltend das Platzieren des ersten Rohrabschnittes (2) mit dem Kanal (5) am Boden des Rohrabschnittes (2).

14. Verfahren nach einem der Ansprüche 11 bis 13, bei welchem die Abschnitte außerhalb des Standortes vor dem *in situ*-Bilden des Rohrs (1) vorgefertigt werden.

15. Verfahren nach einem der Ansprüche 11 bis 14, zudem beinhaltend das Bedecken des Rohrs (1) nach dem Zusammenbau zum Bilden eines unterirdischen Rohrs.

## Revendications

1. Canalisation (11) de drainage d'un fluide, en particulier d'eau, la canalisation (1) comprenant une pluralité de tronçons de canalisation creux à extrémités ouvertes (2), chaque tronçon comprenant :
des extrémités ouvertes opposées (3), chacune étant prévue pour être mise en prise avec une extrémité d'un autre de la pluralité des tronçons, et
une paire de parties d'accotement (4), les parties d'accotement (4) étant séparées angulairement autour du tronçon de canalisation, et formant un canal (5) entre elles,
**caractérisée en ce qu'**une largeur du canal (5) est réglable en modifiant la séparation angulaire des parties d'accotement (4).

2. Canalisation (1) selon la revendication 1, dans lequel chaque tronçon de canalisation (2) comprend en outre au moins une partie d'accouplement mâle et/ou femelle (6) dans la région des extrémités (3) sur au moins une des parties d'accotement (4), pour mettre en prise une partie d'accouplement complémentaire (6) sur un autre de la pluralité des tronçons de canalisation (2), et dans lequel la (les) partie(s) d'accouplement s'étend(ent) sensiblement dans la direction axiale des tronçons de canalisation (2).

3. Canalisation (1) selon la revendication 1, dans lequel le canal (5) est ouvert sur son côté radialement intérieur.

4. Canalisation (1) selon l'une quelconque des revendications précédentes, dans lequel le canal (5) est sensiblement axial le long des tronçons de canalisation (2).

5. Canalisation (1) selon l'une quelconque des revendications précédentes, dans lequel la base du canal est formée de la surface intérieure du tronçon de canalisation (2), les parties d'accotement (4) s'étendent radialement à l'intérieur depuis la surface intérieure de chaque tronçon de canalisation (2), et sont formées sur une surface intérieure de chaque tronçon de canalisation (2).

6. Canalisation (1) selon l'une quelconque des revendications précédentes, dans lequel les parties d'accotement (4) s'étendent à partir d'une extrémité (3) de chaque tronçon de canalisation (2) jusqu'à l'autre.

7. Canalisation (1) selon l'une quelconque des revendications précédentes, dans lequel les parties d'accotement (4) sont formées au niveau de chaque extrémité axiale (3) des tronçons de canalisation (2) et un espacement est formé axialement entre elles.

8. Canalisation (1) selon la revendication 7, comprenant en outre une pièce brute (7) configurée pour s'adapter axialement entre les extrémités des parties d'accotement (4) afin de former un accotement continu d'une extrémité axiale (3) du tronçon de canalisation (2) jusqu'à l'autre.

9. Canalisation (1) selon l'une quelconque des revendications précédentes, comprenant en outre des moyens de guidage, dont la largeur correspond à largeur du canal (5), qui sont mobiles le long du canal (5), les moyens de guidage étant destinés à guider des tronçons de canalisation adjacents (2) pour les mettre en prise pendant l'assemblage de la canalisation.

10. Canalisation (1) selon la revendication 9, dans lequel les moyens de guidage comprennent un chariot (8) doté d'une base allongée (9) et des moyens pour permettre au chariot (8) de se déplacer le long de sa direction allongée.

11. Procédé pour former une canalisation (1) in situ, comprenant :
la fourniture d'un premier tronçon de canalisation (2), le premier tronçon de canalisation (2) comportant un canal (5) défini entre deux accotements (4) séparés angulairement autour du premier tronçon de canalisation (2), dans lequel une largeur du canal (5) est réglable en modifiant la séparation angulaire des accotements (4),
la fourniture d'un chariot (8) dans le canal (5) dans le premier tronçon de canalisation (2) et le positionnement du chariot (8) de manière à ce qu'il s'étende à partir de l'extrémité (3) du premier tronçon de canalisation (2),
la fourniture d'un second tronçon de canalisation (2) à côté du premier tronçon de canalisation (2),
le positionnement du chariot (8) et le déplacement d'au moins un des tronçons de canalisation (2) de manière à ce que le chariot (8) s'étende dans la canal (5) du second tronçon de canalisation (2), et
le rassemblement des tronçons de canalisation (2) afin qu'ils butent l'un contre l'autre.

12. Procédé selon la revendication 11, dans lequel les tronçons de canalisation (2) sont rassemblés de manière à ce que des parties d'accouplement complémentaires (6) sur des parties d'accotement (4) des premier et second tronçons de canalisation (2) se mettent en prise.

13. Procédé selon la revendication 11 ou 12, comprenant en outre le positionnement du premier tronçon de canalisation (2) avec le canal (5) situé au fond du tronçon de canalisation (2).

14. Procédé selon l'une quelconque des revendications 11 à 13, dans lequel les tronçons sont préfabriqués hors site avant de former la canalisation (1) in situ.

15. Procédé selon l'une quelconque des revendications 11 à 14, comprenant en outre le recouvrement de la canalisation (1) après l'assemblage pour former une canalisation enterrée.
